**Europäisches Patentamt**

**European Patent Office**

**Office européen des brevets**

(19)

(11) Veröffentlichungsnummer: **0 263 272 B1**

# EUROPÄISCHE PATENTSCHRIFT

(12)

(45) Veröffentlichungstag der Patentschrift: **02.05.91**

(21) Anmeldenummer: **87111873.3**

(22) Anmeldetag: **17.08.87**

Die Akte enthält technische Angaben, die nach dem Eingang der Anmeldung eingereicht wurden und die nicht in dieser Patentschrift enthalten sind.

(51) Int. Cl.5: **C04B 35/48**, F02F 3/10, F02F 1/00, C04B 35/64

(54) **Sinterformkörper.**

(30) Priorität: **10.10.86 DE 3634588**

(43) Veröffentlichungstag der Anmeldung:
**13.04.88 Patentblatt 88/15**

(45) Bekanntmachung des Hinweises auf die Patenterteilung:
**02.05.91 Patentblatt 91/18**

(84) Benannte Vertragsstaaten:
**AT BE CH DE FR GB IT LI NL SE**

(56) Entgegenhaltungen:
EP-A- 0 172 738
DE-A- 3 307 114
DE-A- 3 415 803
DE-A- 3 612 177

(73) Patentinhaber: **Feldmühle Aktiengesellschaft Fritz-Vomfelde-Platz 4 W-4000 Düsseldorf 1(DE)**

(72) Erfinder: **Dworak, Ulf, Dr. Dipl.-Mineraloge Am Brühl 12 8961 Buchenberg(DE)**
Erfinder: **Olapinski, Hans, Dr, Dipl.-Chem. Talstrasse 12 W-7307 Aichwald 1(DE)**
Erfinder: **Burger, Wolfgang, Dr., Dipl.-Chem. Mühlhaldenweg 75 7310 Plochingen(DE)**

## Beschreibung

Die Erfindung geht aus von einem Gegenstand nach dem Oberbegriff des Anspruchs 1. Die Erfindung betrifft außerdem ein Verfahren zur Herstellung von Sinterformkörpern aus teilstabilisiertem Zirkoniumoxid und deren Verwendung.

Es sind bereits verschiedene Vorschläge bekannt geworden, die Temperaturbeständigkeit der bekannten teilstabilisierten Zirkonoxide zu verbessern. Die EP-A-36 786 sieht zur Verbesserung der Temperaturbeständigkeit im Bereich von 200 bis 300 °C ein teilstabilisiertes Zirkoniumoxid mit 2 bis 7 Mol.% Yttriumoxid als stabilisierendes Oxid vor. Bis zu 30 Mol.% des Yttriumoxids können durch Oxide des Ytterbiums, Scandiums, Niobs, Samariums oder durch Calcium-oder Magnesiumoxid ersetzt sein. Als weitere keramische Werkstoffe können noch bis zu 30 Gew.% Aluminiumoxid, Siliziumoxid und Aluminiumsilikat zugegeben werden. Die Kristallphasenzusammensetzung wird mit kubisch/tetragonal, kubisch/tetragonal und bis zu 20 Vol.% monoklin, tetragonal, tetragonal und bis zu 20 Vol.% monoklin oder kubisch angegeben, läßt also hinsichtlich der kubisch/ tetragonalen Anteile keinen genauen Schluß zu. Um das Zirkoniumoxid in der tetragonalen Modifikation zu erhalten, ist gemäß der EP-A-36 786 vorgesehen, daß das Zirkoniumoxid im Sinterformkörper in einer 2 μm nicht überschreitenden Korngröße vorliegt, vorzugsweise soll die Korngröße sogar < 1 μm sein. Um zu einer derartig feinen Korngröße zu gelangen, sieht die EP-A-36 786 die Verwendung von Zirkonium-bzw. Yttriumoxidausgangsverbindungen vor, also z.B. der entsprechenden Chloride, Nitrate oder Oxalate, die zunächst gemischt, dann thermisch zersetzt und anschließend naß gemahlen werden, um zu einem extrem feinen Ausgangspulver zu gelangen, mit dem die Herstellung eines Sinterformkörpers hoher Dichte und ausreichender Festigkeit mit einer Korngröße < 2 μm unter Anwendung einer Sintertemperatur unterhalb 1500 °C möglich ist. Diese Temperatur darf nicht überschritten werden, wenn die gewünschte Teilchengröße von < 2 μm im gesinterten Formkörper erhalten werden soll. Der wesentliche Unterschied des in der EP-A- 36 786 beschriebenen Werkstoffes liegt im Vergleich zu den übrigen aus dem Stand der Technik bekannten, ebenfalls teilstabilisierten Zirkoniumoxiden in der Gefügestruktur. Durch die extrem geringe Korngröße in Verbindung mit der relativ niedrigen Sintertemperatur wird gemäß der EP-A-36 786 eine Struktur erzielt, bei der die einzelnen Körner des Gefüges in Abhängigkeit von ihrer Größe und ihrem Gehalt an stabilisierenden Oxiden selbst in der kubischen bzw. tetragonalen oder auch monoklinen Modifikation vorliegen.

Dieses komplizierte Herstellungsverfahren führt zu einem extrem teuren Ausgangsmaterial und hat bisher einem breit gestreuten Einsatz von aus diesem Werkstoff bestehenden Sinterformkörpern entgegengestanden. Zudem hat sich gezeigt, daß die thermische Belastbarkeit vielfach noch nicht befriedigt. Insbesondere unterliegen diese Materialien im Temperaturbereich zwischen 200 bis 500 °C einer hydrothermalen Zersetzungsreaktion, die auf die Bildung von Yttriumhydroxid zurückzuführen ist. Ein weiterer Nachteil dieses extrem feinkörnigen Zirkoniumoxidwerkstoffes besteht in seiner hohen Kriechgeschwindigkeit bei hohen Temperaturen. Sie liegt um ca. 1 bis 2 Zehnerpotenzen höher als bei grobkörnigen teilstabilisierten Zirkoniumoxidwerkstoffen.

Aus der EP-A- 172738 ist ein Sinterformkörper aus Zirkoniumoxid bekannt, das mit einer Abmischung von 0,5 bis 10 Gew.% Yttriumoxid und 1 bis 10 Gew.% eines weiteren Oxids aus der Gruppe Magnesiumoxid, Calciumoxid, Kupferoxid, Zinkoxid und Ceroxid teilstabilisiert ist. Die Kristallphasenzusammensetzung wird mit 50 bis 70 Vol.% kubischem $ZrO_2$, mehr als 20 und bis zu 50 Vol.% tetragonalem $ZrO_2$ angegeben, das als Ausscheidungen von 0,25 bis 0,75 μm entsprechend 250 bis 750 nm in den aus kubischem $ZrO_2$ bestehenden Körnern vorliegen soll. Der Anteil an monoklinem $ZrO_2$, das in einer Größe von 1 bis 10 μm entlang den Korngrenzen vorliegen soll, wird mit weniger als 10 Vol.% angegeben. Vorzugsweise soll die Menge der stabilisierenden Oxide bei jeweils weniger als 3 Gew.% $Y_2O_3$ und MgO liegen.

Gemäß dieser Schrift soll die Bruchfestigkeit, Zähigkeit und Thermoschockbeständigkeit verbessert werden. Bei einer angegebenen Dichte von 5,82 liegt die gemäß der EP-A- 172738 erreichte höchste Biegebruchfestigkeit bei umgerechnet 611 MPa, wobei es sich dabei um einen bei Raumtemperatur ermittelten Messwert handelt. Es hat sich jedoch gezeigt, daß trotz dieser an sich relativ hohen Bigebruchfestigkeit die Temperaturbelastbarkeit, insbesondere die Formstabilität von aus solchem teilstabilisierten Zirkoniumoxid hergestellten Bauteilen vielfach noch nicht ausreicht.

Vermutlich ist dieser Nachteil auf die Größe der tetragonalen Ausscheidungen zurückzuführen. Bei wiederholter Temperaturbelastung im kritischen Bereich von > 900 °C, wobei bereits eine zwei- oder dreimalige Temperaturwechselbeanspruchung ausreichend sein kann, wandeln die tetragonalen Ausscheidungen nach monoklin um. Das Vorliegen der relativ groben tetragonalen Ausscheidungen ist dabei vermutlich auf die zunächst sehr schnelle und die daran anschließende langsame Abkühlung bzw. das Halten bei Temperaturen zwischen 1000 und 1475 °C zurückzuführen. Das Magnesiumoxid diffundiert dabei unter Bildung von unterstabilisierten Bereichen, so daß sich im Inneren der kubischen Körner die ge-

EP 0 263 272 B1

wünschten - relativ groben - tetragonalen Präzipitate und an den Korngrenzen monoklines ZrO₂ bilden.

Gemäß der WO 83/04247 wurde auch bereits vorgeschlagen, einem mit 3 bis 3,65 Gew.% MgO teilstabilisierten Zirkoniumoxid noch 0,05 bis 1 Gew.% Strontium- oder Bariumoxid zuzusetzen. In dieser Schrift werden sowohl hochfeste und bei Raumtemperatur einsetzbare ZrO₂-Keramiken beschrieben, als auch solche, die bei hoher Temperatur einsetzbar sind, aber über eine geringere Festigkeit verfügen können. Die Mikrostruktur der ZrO₂-Keramik soll dabei in Abhängigkeit vom Temperaturbereich, in dem der Einsatz der Keramik erfolgen soll, so ausgebildet sein, daß der monokline ZrO₂-Anteil, der als Ausscheidung in der kubischen Matrix vorliegt, um so höher ist, je höher der Temperaturbereich ist, in dem die ZrO₂-Keramik eingesetzt werden soll. Für eine kurzfristig bei hohen Temperaturen einsetzbare ZrO₂-Keramik wird demzufolge ein monokliner Phasenanteil von 35 bis 65 Vol.% - gemessen an der spiegelglanzpolierten Oberfläche - vorgesehen. Der an den Korngrenzen vorliegende monokline ZrO₂-Anteil kann dabei bis zu 30 Vol.%, vorzugsweise nur bis 20 Vol.% betragen.

Obwohl für das gemäß dieser Schrift hergestellte temperaturfeste Zirkoniumoxid Einsatzbereiche von über 1000 °C angegeben werden, enthält diese Schrift keine Angaben bezügl. der bei diesen Temperaturen festgestellten Biegebruchfestigkeiten. Der Nachteil dieses Werkstoffes besteht in der fehlenden Formstabilität bei hohen Temperaturen, die sich wie folgt erklärt:

Bei der Herstellung der Keramik entsteht bereits ein hoher Anteil an monoklinen Ausscheidungen und die Größe der noch in tetragonaler Modifikation vorliegenden Ausscheidungen ist bereits stark angewachsen. Bei erneuten Temperaturbelastungen wandeln dann wegen dem damit verbundenen Wachstum der tetragonalen Ausscheidungen immer weitere zunächst noch in tetragonaler Modifikation vorliegende Ausscheidungen unter Volumenzunahme in die monokline Modifikation um.

Die DE-A- 34 15 803 betrifft einen Formkörper aus Zirkoniumoxid, dem 0,5 bis 4 Mol.% (0,9 bis 7,4 Gew.%) Seltenerdoxid und 0,5 bis 7 Mol.% (0,16 bis 2,4 Gew.%) Magnesiumoxid zugesetzt sind. Die kubischen Körner dieses bekannten Formkörpers sollen zur Erzeugung einer feinkörnigen Struktur im Bereich von 1 bis 15 μm mit Mg-Al-Spinell-Teilchen überzogen sein. Bezüglich der Größe der in tetragonaler Modifikation vorliegenden Ausscheidungen enthält diese Schrift keine Angaben, monokline Ausscheidungen werden nicht erwähnt. Zur Erzeugung der Mg-Al-Spinell-Umhüllung wird Al₂O₃ dem Y₂O₃-dotierten ZrO₂ zugesetzt und in Gegenwart von MgO gesintert, wobei sich infolge der zwischen Al₂O₃ und MgO beim Sinterprozeß stattfindenden Reaktion die Umhüllung von Mg-Al-Spinell-Teilchen auf den kubischen Körnern ausbildet.

Gemäß einem eigenen und in der DE-A- 33 07 114 gemachten älteren Vorschlag der Anmelderin besteht ein Kreisring für ein wärmeisolierendes Bauteil im Zylinderkopf eines Kolbenmotors aus teilstabilisiertem Zirkoniumoxid. Auch dieser bekannte Werkstoff soll relativ grobe Körner im Bereich von 50 μm aufweisen und tetragonale Phasenanteile im Bereich von 20 bis 60 Gew.% besitzen. Als stabilisierende Oxide werden die Oxide des Calciums, Magnesiums und Yttriums aufgeführt, in ihrer mengenmäßigen Zusammensetzung jedoch nicht näher angegeben. Es wird eine Biegebruchfestigkeit des bekannten Werkstoffes von 400 MPa angegeben, die offensichtlich für eine Messung bei Raumtemperatur gilt, da Angaben bezüglich einer durchgeführten Temperaturbelastung fehlen. Es hat sich zwischenzeitlich erwiesen, daß bei den aus dem Stand der Technik bekannten Zirkoniumoxiden, sofern sie mit lediglich nur Magnesiumoxid oder Yttriumoxid stabilisiert sind, sich thermische Belastbarkeiten ergeben, die für die in diesem Punkt immer höher geschraubten Anforderungen in vielen Fällen noch nicht ausreichen.

In der eigenen älteren und nicht vorveröffentlichten EP-A- 200 954, die den Stand der Technik bildet, von dem die vorliegende Erfindung ausgeht, wird alternativ zur Ausbildung eines lediglich aus teilstabilisiertem Zirkoniumoxid bestehenden Sinterformkörpers auch die Zugabe von 5 bis 20 Vol.% Spinell (MgAl₂O₄) beschrieben. Im Unterschied zu der vorstehend diskutierten DE-A- 34 15 803 wird hier also von einem bereits durchreagierten Spinell ausgegangen, so daß die aus der EP-A- 200 954 bekannte Mikrostruktur eines MgAl₂O₄ enthaltenden Sinterformkörpers sich dadurch vom Sinterformkörper der DE-A- 34 15 803 unterscheidet, daß MgAl₂O₄-Körner zwischen den kubischen Matrixkörnern liegen, diese aber nicht vollständig umhüllen, so daß auch noch Kontakt zwischen den kubischen Matrixkörnern besteht und die keramischen Werkstoffe homogen verteilt sind.

Das aus der EP-A- 200 954 bekannte teilstabilisierte Zirkoniumoxid läßt einerseits noch monokline Phasenanteile bis zu 10 Vol.% zu, strebt andererseits aber zur Erzielung einer besonders hohen Temperaturbelastbarkeit die Absenkung der monoklinen Anteile auf kleiner 1 % an. Dadurch bestand einmal der Nachteil, daß der Fertigungsaufwand in nicht vertretbarer Weise anwuchs und daß andererseits bei einem oberhalb von 5 Vol.% liegenden monoklinen Phasenanteil eine besonders hohe Temperaturbelastbarkeit nicht erzielt werden konnte. Darüberhinaus hatte sich gezeigt, daß die laut der EP-A- 200 954 zulässigen hohen Y₂O₃-Dotierungen in nachteiliger Weise zu einer weiteren Verteuerung führen.

Ausgehend von diesem Stand der Technik hat die vorliegende Erfindung die Aufgabe, ein weiter

3

verbessertes teilstabilisiertes Zirkoniumoxid zu entwickeln, das auch unter hohem Temperatureinfluß noch eine ausgezeichnete Biegebruchfestigkeit und Temperaturbeständigkeit zeigt, so daß es möglich ist, aus einem solchen Zirkoniumoxid Bauteile herzustellen, die auch bei Temperaturen von mehr als 1000 °C über einen längeren Zeitraum eingesetzt werden können. Die Erfindung will auch ein Zirkoniumoxid zur Verfügung stellen, das bei hohen Temperaturen über eine gute Formstabilität verfügt. Eine weitere Aufgabe sieht die Erfindung in der Entwicklung eines kostengünstigeren Herstellungsverfahrens für ein teilstabilisiertes Zirkoniumoxid, das über eine gute Formstabilität verfügt.

Zur Lösung dieser Aufgabe sieht die Erfindung bei einem Sinterformkörper aus teilstabilisiertem Zirkoniumoxid, der ggf. weitere homogen verteilte keramische Stoffe enthält, eine Mischung von stabilisierenden Oxiden vor, die aus Magnesiumoxid und Yttriumoxid besteht, wobei die stabilisierenden Oxide rechnerisch einer äquivalenten Zusatzmenge von 2,5 bis 4,5 Gew.% Magnesiumoxid -bezogen auf die Gesamtzusammensetzung - des teilstabilisierten Zirkoniumoxids entspricht, wobei 10 bis 70 % des Magnesiumoxids durch eine grammäquivalente Yttriumoxid-Menge substituiert sind und der Sinterformkörper eine Kristallphasenzusammensetzung des Zirkoniumoxids aufweist, bei der tetragonale Ausscheidungen in einer Menge von 30 bis 60 Vol.% und monokline Ausscheidungen in einer Menge von < 5 Vol.%, Rest: kubische Modifikation, jeweils gemessen an der spiegelglanz-polierten Oberfläche, vorliegen, und der Sinterformkörper eine mittlere Korngröße von 5 bis 70 µm aufweist und durch die Kombination der nachfolgenden Merkmale gekennzeichnet ist: nach dem Sintern (as fired) liegen innerhalb der kubischen Matrixkörner monokline Ausscheidungen in einer Menge von 2 bis 5 Vol.% vor, die tetragonalen Ausscheidungen weisen eine Größe < 200 nm auf und der Sinterformkörper enthält neben 0,5 bis 2 Gew.% Magnesiumoxid noch zusätzlich 1 bis 5 Gew.% Yttriumoxid, jeweils bezogen auf den Sinterformkörper.

Die Lösung der erfindungsgemäßen Aufgabe durch das im kennzeichnenden Teil des Hauptanspruchs angegebene teilstabilisierte Zirkoniumoxid ist in sofern als überraschend zu werten, als gemäß der WO 83/04247 für bei hohen Temperaturen einsetzbares Zirkoniumoxid noch ein relativ hoher Anteil von monoklinem ZrO$_2$ als unerläßlich angesehen wurde. Abweichend von den Lehren der EP-A- 172738, in der auf relativ grobe Ausscheidungen abgestellt wird, sieht die vorliegende Erfindung wesentlich feinere Ausscheidungen vor. Voraussichtlich läßt sich die höhere Temperaturbelastbarkeit, insbesondere die gute Formstabilität, des erfindungsgemäßen ZrO$_2$ dadurch erklären, daß die Ausscheidungen sehr homogen verteilt sind und die Größe von 200 nm nicht überschreiten. Bei oberhalb von 5 Vol.% in monokliner Modifikation vorliegenden Ausscheidungen besteht die Gefahr einer sehr schnellen Umwandlung der noch in tetragonaler Modifikation vorliegenden Ausscheidungen. Andererseits würde ein Arbeiten im Bereich von < 2 Vol.% monoklinen Zirkoniumoxids ein zu aufwendiges Herstellungsverfahren erfordern.

Eine wesentliche Bedeutung kommt auch dem Merkmal einer mittleren Korngröße von 5 bis 70 µm zu. Diese Korngröße im fertigen Sinterformkörper vermeidet die aus der eingangs diskutierten EP-A- 36786 bekannten Nachteile zur Erzielung der extrem feinen Ausgangspulver und gestattet ferner - abweichend von den in der EP-A-172738 gegebenen Lehren bezüglich der Vermeidung eines starken Kornwachstums - auch noch das Vorliegen von relativ groben Körnern. Die erfindungsgemäßen Sinterformkörper unterliegen auch nicht der eingangs zur EP-A- 36 786 beschriebenen hydrothermalen Zersetzungsreaktion, weil das homogen im kubischen Matrixkorn verteilte Yttriumoxid aufgrund der vergleichsweisen groben Gefügestruktur nur in eingeschränktem Umfang einem Wasserdampfeinfluß zugänglich ist.

Bevorzugte Ausführungsformen ergeben sich aus den Unteransprüchen. Die Korngröße kann in einer erheblichen Weise durch die Zugabe von Spinell (MgAl$_2$O$_4$) beeinflußt werden. Sofern der Sinterformkörper neben dem teilstabilisierten Zirkoniumoxid und Strontiumoxid noch Spinell in einer Menge von 5 bis 20 Vol.% enthält, liegt die mittlere Korngröße vorzugsweise in einem Bereich von 7 bis 15 µm. Demgegenüber liegt ein bevorzugter Korngrößenbereich für einen lediglich aus teilstabilisiertem Zirkoniumoxid und Strontiumoxid bestehenden Sinterformkörper in einem Bereich von 55 bis 70 µm. Für einen aus Zirkoniumoxid unter Zusatz von Yttriumoxid und Magnesiumoxid und ggf Strontiumoxid hergestellten Sinterformkörper gemäß der vorliegenden Erfindung liegt die bevorzugte Dichte bei 5,75 bis 5,95 g/cm$^3$. Bei Zugabe von Spinell liegt die Dichte vorzugsweise bei 5,0 bis 5,6 g/cm$^3$. Wesentlich ist auch die Verwendung von hochreinen Ausgangsstoffen. Vorzugsweise enthält der Sinterkörper nicht mehr als 1 Gew.% Verunreinigungen, wobei der Anteil an verunreinigendem SiO$_2$ vorzugsweise < 0,2 Gew.% sein soll.

Zur Herstellung der erfindungsgemäßen Sinterformkörper hat sich eine Dotierung der stabilisierenden Oxide Magnesiumoxid und Yttriumoxid als besonders geeignet erwiesen, die bezogen auf den gesinterten Formkörper einer Menge von 2,5 bis 4,5 Gew.% Magnesiumoxid äquivalent ist. Das Magnesiumoxid ist dabei vorzugsweise durch 10 bis 70 % durch Yttriumoxid substituiert.

Eine ganz wesentliche Bedeutung kommt auch dem Herstellungsverfahren des erfindungsgemäßen Sinterformkörpers zu. Dabei muß die Sinterung auf jeden Fall im kubischen Einphasengebiet von mehr als 1600 °C erfolgen, so daß eine schnelle und gute Homogenisierung der Ausgangsmischung stattfindet und

4

auch i igen Sinterformkörper eine homogene Verteilung der stabilisierenden Oxide in der Zirkoniumoxid-Matrix vorliegt. Insbesondere durch die Temperaturführung während des Abkühlungsprozesses wird die Größe der Ausscheidungen innerhalb des kubischen Matrixkornes ganz wesentlich beeinflußt. Wesentlich ist auf jeden Fall, daß der erfindungsgemäße Sinterformkörper nach Abschluß des Sinter- bzw. Abkühlprozesses und vor seinem Einsatz im Hochtemperaturbereich keinen Temperatureinflüssen unterworfen wird, die ein Anwachsen der tetragonalen Ausscheidungen über 200 nm bzw. einen Anstieg der monoklinen Ausscheidungen über 5 Vol.% bewirken.

Sofern in Patentansprüchen und Beschreibung der Ausdruck "spiegelglanzpoliert" verwendet ist, soll darunter verstanden werden, daß der Sinterformkörper nach dem Sintern einer Politur unterzogen wurde, bei der eine spiegelglatte Oberfläche entsteht. Die Messung der Kristallphasen erfolgt an der polierten Oberfläche nach der Röntgen-Beugungsmethode.

Die zur vorliegenden Erfindung beschriebenen Ausscheidungen weisen die Form eines elliptischen Sphäroids auf Die gemachten Größenangaben beziehen sich auf dessen größten Durchmesser. In den beiden anderen Richtungen weist das Sphäroid eine wesentlich kleinere, d.h. eine um ca. das dreifach geringere Abmessung auf.

Die nachfolgenden Beispiele dienen der näheren Erläuterung der Erfindung, ohne die Erfindung auf die beschriebenen Ausführungsformen zu beschränken. Die Pulveraufbereitung erfolgt dabei durch Naßmahlung der Pulvermischung auf einer Schwingmühle bis zu einer Teilchengröße $D_{50}$ von ca. 1μm. Nach Zusatz einer Polyvinylalkohollösung als Bindemittel wird sprühgetrocknet, aus dem erhaltenen sprühgetrockneten Pulver Formkörper gepreßt und diese mit einer Aufheizrate von 100 °C/h, einer Haltezeit von 5 h über 1770 °C und einer Abkühlrate von 300 °C/h auf Raumtemperatur abgekühlt. Die angegebenen Bruchfestigkeitswerte wurden an Prüfkörpern mit einem Querschnitt von 3,5 × 4 mm und einer Länge von 55 mm nach der 4-Punkt-Meßmethode ermittelt.

Beispiel 1:

Nachfolgende Pulvermischung kommt zum Einsatz:

$$2,5 \text{ Gew.\% } MgO$$
$$1,9 \text{ Gew.\% } Y_2O_3$$
$$0,3 \text{ Gew.\% } SrO$$
$$95,3 \text{ Gew.\% } ZrO_2$$

Der Einfluß der Temperaturbelastung bei 1000 °C geht aus der nachfolgenden Tabelle hervor:

## Tabelle:

| Zeit (h) | Dichte (g/cm$^3$) | Bruchfestig-keit (MPa) | Anteile der monokl.Modifikat. |
|---|---|---|---|
| 24 | 5,83 | 623 | < 1 |
| 500 | 5,82 | 661 | < 4 |
| 700 | 5,81 | 621 | < 4 |
| 1000 | 5,82 | 638 | < 4 |

Vorstehende Werte wurden bei Raumtemperatur gemessen. Die bei 1000 °C und nach 1000 h gemessene Biegebruchfestigkeit $\sigma_B$ betrug 220 MPa.

Aus den Angaben zur Dichte und den Angaben bezüglich der monoklinen Anteile ist zu entnehmen, daß die Formkörper auch unter starker Temperaturbelastung nahezu keine Formveränderung erfahren und insofern über eine ausgezeichnete Formbeständigkeit verfügen.

Beispiel 2:

Nachfolgende Pulvermischung kommt zum Einsatz:

$$2,7 \text{ Gew.\% } MgO$$
$$1,8 \text{ Gew.\% } Y_2O_3$$
$$0,5 \text{ Gew.\% } SrO$$
$$10,0 \text{ Gew.\% } MgAl_2O_4$$
$$85,0 \text{ Gew.\% } ZrO_2$$

Der Einfluß der Temperaturbelastung bei 1000 °C geht aus der nachfolgenden Tabelle hervor:

## Tabelle:

| Zeit (h) | Dichte (g/cm³) | Bruchfestig-keit (MPa) | Anteile der monokl.Modifikat. |
|---|---|---|---|
| 0 | 5,47 | 600 | – |
| 10 | 5,47 | 630 | – |
| 100 | 5,47 | 640 | < 1 |
| 500 | 5,47 | 660 | < 2 |
| 1000 | 5,46 | 683 | < 6 |

Vorstehende Werte wurden bei Raumtemperatur gemessen.

Nach einer Temperaturbelastung von 1000 h bei 1000 °C beträgt die Biegebruchfestigkeit $\sigma_B$ 254 MPa. Wie in Beispiel 1 ist auch hier an den Werten der Dichte und den Anteilen der monoklinen Modifikation abzulesen, daß die Sinterformkörper über eine hohe Formbeständigkeit verfügen.

Beispiel 3:

Nachfolgende Pulvermischung wird eingesetzt:
1,8 Gew.% MgO
3,8 Gew.% $Y_2O_3$
0,5 Gew.% SrO
93,9 Gew.% $ZrO_2$
Der Einfluß der Temperaturbelastung bei Temperaturen von 1100 °C bis 1400 °C geht aus den nachfolgenden Tabellen hervor:

Temperaturbelastung bei 1100 °C

| Zeit (h) | Dichte (g/cm$^3$) | Bruchfestig-keit (MPa) | Anteile der monokl.Modifikat. |
|---|---|---|---|
| 0 | 5,86 | 453 | 1 |
| 24 | 5,86 | 462 | 1 |
| 112 | 5,86 | 447 | 1 |
| 192 | 5.85 | 486 | 1 |
| 288 | 5,87 | 469 | 1 |
| 1000 | 5,85 | 495 | 1 |

### Temperaturbelastung bei 1200 °C

| Zeit (h) | Dichte g/cm³) | Bruchfestig-keit (MPa) | Anteile der monokl.Modifikat. |
|---|---|---|---|
| 0 | 5,86 | 453 | 1 |
| 20 | 5,86 | 474 | 1 |
| 120 | 5,86 | 493 | 1 |
| 180 | 5,84 | 447 | 1 |
| 350 | 5,85 | 502 | 1 |

### Temperaturbelastung bei 1300 °C

| Zeit (h) | Dichte g/cm³) | Bruchfestig-keit (MPa) | Anteile der monokl.Modifikat. |
|---|---|---|---|
| 0 | 5,86 | 453 | 1 |
| 50 | 5,87 | 531 | 2 |
| 120 | 5,86 | 552 | 2 |
| 300 | 5,87 | 567 | 5 |

### Temperaturbelastung bei 1400 °C

| Zeit (h) | Dichte g/cm³) | Bruchfestig-keit (MPa) | Anteile der monokl.Modifikat. |
|---|---|---|---|
| 0 | 5,86 | 453 | 1 |
| 50 | 5,86 | 517 | 3 |
| 120 | 5,87 | 539 | 4 |
| 150 | 5,86 | 557 | 5 |

Vorstehende Werte wurden bei Raumtemperatur gemessen.

Nach einer Temperaturbelastung von 1000 h bei 1000 °C beträgt die Biegebruchfestigkeit $\sigma_B$ 220 MPa. Wie in den vorhergehenden Beispielen ist auch hier an den Werten der Dichte und den Anteilen der monoklinen Modifikation abzulesen, daß die Sinterformkörper über eine hohe Formbeständigkeit verfügen.

Beispiel 4:

8

Nachfolgende Pulvermischung wird eingesetzt:

2,4 Gew.% MgO

2,1 Gew.% $Y_2O_3$

95,5 Gew.% $ZrO_2$

24 % des zugegebenen Magnesiumoxids sind durch eine grammäquivalente an Yttriumoxid ersetzt. Der Einfluß der Temperaturbelastung bei 1000 °C geht aus der nachfolgenden Tabelle hervor:

## Temperaturbelastung bei 1100 °C

| Zeit (h) | Dichte (g/cm$^3$) | Bruchfestig-keit (MPa) | Anteile der monokl. Modifikat. |
|---|---|---|---|
| 0 | 5,83 | 573 | 1 |
| 100 | 5,85 | 643 | 2 |
| 250 | 5,87 | 619 | 2 |
| 500 | 5.86 | 676 | 2 |
| 750 | 5,84 | 707 | 3 |
| 1000 | 5,82 | 687 | < 5 |

Vorstehende Werte wurden bei Raumtemperatur gemessen.

Die bei 1000 °C ermittelte Biegebruchfestigkeit $\sigma_B$ beträgt 242 MPa.

## Ansprüche

1. Sinterformkörper aus teilstabilisiertem Zirkoniumoxid, gegebenenfalls in Abmischung mit weiteren homogen verteilten keramischen Stoffen,
   - einer Mischung von stabilisierenden Oxiden, bestehend aus Magnesiumoxid und Yttriumoxid, die rechnerisch einer äquivalenten Zusatzmenge von 2,5 bis 4,5 Gew.% Magnesiumoxid - bezogen auf die Gesamtzusammensetzung - des teilstabilisierten Zirkoniumoxids entspricht, wobei 10 bis 70 % des Magnesiumoxids durch eine grammäquivalente Yttriumoxidmenge substituiert sind;
   - einer Kristallphasenzusammensetzung des Zirkoniumoxids, bei der: tetragonale Ausscheidungen in einer Menge von 30 bis 60 Vol.% und monokline Ausscheidungen in einer Menge bis zu 5 Vol.%, Rest: kubische Modifikation, jeweils gemessen an der spiegelglanzpolierten Oberfläche, vorliegen;
   - einer mittleren Korngröße des Sinterformkörpers von 5 bis 70 $\mu$m; gekennzeichnet durch die Kombination der nachfolgenden Merkmale:
   a) nach dem Sintern (as fired) liegen innerhalb der kubischen Matrixkörner monokline Ausscheidungen in einer Menge von 2 bis 5 Vol.% vor;
   b) die tetragonalen Ausscheidungen weisen eine Größe kleiner 200 nm auf;
   c) der Sinterformkörper enthält neben 0,5 bis 3 Gew.% Magnesiumoxid und einen Siliziumdioxid-Aüteil von weniger 012 Gew.% noch zusätazlich 1 bis 5 Gew.% Yttriumoxid, jeweils bezogen auf den Sinterformkörper.

2. Sinterformkörper nach Anspruch 1, dadurch gekennzeichnet, daß das Yttriumoxid in einer Menge von 2 bis 4,5 Gew.% vorliegt.

3. Sinterformkörper nach einem der Ansprüche 1 und 2, dadurch gekennzeichnet, daß die tetragonalen Ausscheidungen in einer Größe von 20 bis 150 nm vorliegen.

9

4. Sinterformkörper nach einem der Ansprüche 1 bis 3, dadurch gekennzeichnet, daß der Sinterformkörper zusätzlich noch 0,05 bis 1 Gew.% Strontiumoxid enthält.

5. Sinterformkörper nach einem der Ansprüche 1 bis 4, dadurch gekennzeichnet, daß der Sinterformkörper neben teilstabilisiertem Zirkoniumoxid noch aus 5 bis 20 Vol.% Spinell (MgAl$_2$O$_4$) als weiterem keramischen Stoff besteht.

6. Sinterformkörper nach einem der Ansprüche 1 bis 5, dadurch gekennzeichnet, daß er eine Biegebruchfestigkeit $\sigma_B$ aufweist, die nach einer Temperaturbelastung von 1000 h bei 1000 °C:
    1. > 400 MPa, gemessen bei Raumtemperatur,
    2. > 200 MPa, gemessen bei 1000 °C beträgt.

7. Verfahren zur Herstellung des Sinterformkörpers nach einem der Ansprüche 1 bis 3 und 6, dadurch gekennzeichnet, daß eine Mischung aus Zirkoniumoxid mit Magnesiumoxid in einer Menge von 0,5 bis 3 Gew.% und Yttriumoxid in einer Menge von 1,0 bis 5 Gew.% - bezogen auf die Gesamtzusammensetzung des teilstabilisierten Zirkoniumoxids im Sinterformkörper - unter Zusatz eines Dispergierungsmittels naßgemahlen und nach Sprühtrocknung aus der Pulvermischung ein Körper gepreßt wird und dieser auf eine zur Erzeugung der kubischen Phase ausreichende Temperatur von mindestens 1600 °C erhitzt wird und bei einer Haltezeit von mindestens 0,5 h mit einer Abkühlrate von 250 °C/h bis 400 °C/h auf Raumtemperatur abgekühlt wird.

8. Verfahren zur Herstellung des Sinterformkörpers nach einem der Ansprüche 1 bis 3 und 5 bis 7, dadurch gekennzeichnet, daß der Mischung noch Spinell (MgAl$_2$O$_4$) in einer solchen Menge zugesetzt wird, daß der Sinterformkörper 5 bis 20 Vol% Spinell (MgAl$_2$O$_4$) enthält.

9. Verfahren zur Herstellung des Sinterformkörpers nach einem der Ansprüche 1 bis 8, dadurch gekennzeichnet, daß der Mischung zusätzlich noch 0,05 bis 1 Gew.% Strontiumoxid zugesetzt werden.

10. Verwendung des Sinterformkörpers nach einem der Ansprüche 1 bis 9 für ein bei Temperaturen von über 900 °C dauerbelastetes Bauteil in Form von: Ziehdüsen, Isothermgesenken zum Umformen von Metallen, Kolbenmulden, Zylinderkopfplatten, Ventilführungen, Zylinderauskleidungen, Sauerstoffmessonden (Lambdasonden).

## Claims

1. Sintered moulded body consisting of partially stabilised zirconium oxide, optionally in admixture with further homogeneously distributed ceramic materials,
    - a mixture of stabilising oxides, consisting of magnesium oxide and yttrium oxide, which corresponds theoretically to an equivalent added amount of from 2.5 to 4.5 % by weight magnesium oxide - based on the total composition - of the partially stabilised zirconium oxide, wherein from 10 to 70 % of the magnesium oxide have been replaced by a gram equivalent amount of yttrium oxide;
    - a crystal phase composition of zirconium oxide, in which:
        tetragonal precipitates are present in an amount of from 30 to 60 % by volume and monoclinic precipitates are present in an amount of less than 5 % by volume, remainder: cubic modification, in each case measured at the mirror-bright polished surface;
    - a mean particle size of the sintered moulded body of from 5 to 70 $\mu$m; characterised by the combination of the following features:
    a) as fired, monoclinic precipitates are present within the cubic matrix crystals in an amount of from 2 to 5 % by volume;
    b) the tetragonal precipitates have a size of less than 200 nm;
    c) the sintered moulded body contains, in addition to from 0.5 to 3 % by weight magnesium oxide and a silicon dioxide content of less than 0.2 % by weight, also from 1 to 5 % by weight yttrium oxide, in each case based on the sintered moulded body.

EP 0 263 272 B1

2. Sintered moulded body according to claim 1, characterised in that the yttrium oxide is present in an amount of from 2 to 4.5 % by weight.

3. Sintered moulded body according to claim 1 or claim 2, characterised in that the tetragonal precipitates are present in a size of from 20 to 150 nm.

4. Sintered moulded body according to any one of claims 1 to 3, characterised in that the sintered moulded body additionally contains from 0.05 to 1 % by weight strontium oxide.

5. Sintered moulded body according to any one of claims 1 to 4, characterised in that the sintered moulded body comprises, in addition to partially stabilised zirconium oxide, also from 5 to 20 % by volume spinel ($MgAl_2O_4$) as a further ceramic material.

6. Sintered moulded body according to any one of claims 1 to 5, characterised in that it has a bending strength $\sigma_B$ that, after thermal stressing for 1000 hours at $1000\,^{\circ}C$, is:
   1. > 400 MPa, measured at room temperature,
   2. > 200 MPa, measured at $1000\,^{\circ}C$.

7. Process for the manufacture of the sintered moulded body according to any one of claims 1 to 3 and 6, characterised in that a mixture of zirconium oxide with magnesium oxide in an amount of from 0.5 to 3 % by weight and yttrium oxide in an amount of from 1.0 to 5 % by weight - based on the total composition of the partially stabilised zirconium oxide in the sintered moulded body - is wet-ground with the addition of a dispersing agent and, after spray-drying, a body is pressed from the powder mixture and is heated to a temperature, sufficient to produce the cubic phase, of at least $1600\,^{\circ}C$ and, with a dwell time of at least 0.5 hour, is cooled to room temperature at a cooling rate of from $250\,^{\circ}C$/hour to $400\,^{\circ}C$/hour.

8. Process for the manufacture of the sintered moulded body according to any one of claims 1 to 3 and 5 to 7, characterised in that spinel ($MgAl_2O_4$) is additionally added to the mixture in an amount such that the sintered moulded body contains from 5 to 20 % by volume spinel ($MgAl_2O_4$).

9. Process for the manufacture of the sintered moulded body according to any one of claims 1 to 8, characterised in that there is additionally added to the mixture from 0.05 to 1 % by weight strontiumoxide.

10. Use of the sintered moulded body according to any one of claims 1 to 9 for a component repeatedly exposed to temperatures above $900\,^{\circ}C$, in the form of: drawing dies, isothermal forging dies for forming metals, piston cups cylinder head plates, valve stem guides, cylinder linings, oxygen measuring probes (lambda probes).

## Revendications

1. Corps moulé fritté en oxyde de zirconium partiellement stabilisé, éventuellement en mélange avec d'autres matériaux céramiques répartis de façon homogène,
   - un mélange d'oxydes stabilisants, constitué d'oxyde de magnésium et d'oxyde d'yttrium, qui correspond à une quantité ajoutée équivalente calculée de 2,5 à 4,5 % en poids d'oxyde de magnésium, par rapport à la composition totale d'oxyde de zirconium partiellement stabilisé, 10 à 70 % de l'oxyde de magnésium étant remplacés par une quantité, équivalente en grammes, d'oxyde d'yttrium;
   - une composition de phase cristalline d'oxyde de zirconium, dans laquelle:
     il existe des précipités tétragonaux, en une quantité de 30 à 60 % en volume, et des précipités monocliniques, en une quantité inférieure à 5 % en volume, le reste étant constitué par une variété cubique, proportions mesurées dans chaque cas à la surface polie jusqu'à briller comme un miroir;
   - une grosseur moyenne des grains du corps moulé fritté de 5 à 70 $\mu$m: caractérisé par la

11

combinaison des caractéristiques suivantes:

a) après le frittage (as fired), il existe, à l'intérieur des grains de matrice cubiques, des précipités monocliniques, en une proportion de 2 à 5 % en volume;

b) les précipités tétragonaux présentent une grosseur inférieure à 200 nm;

c) le corps moulé fritté contient, outre 0,5 à 3 % en poids d'oxyde de magnésium et une proportion de dioxyde de silicium inférieure à 0,2 % en poids, en plus, 1 à 5 % en poids d'oxyde d'yttrium, proportions calculées dans chaque cas par rapport au corps moulé fritté.

2. Corps moulé fritté selon la revendication 1, caractérisé en ce que l'oxyde d'yttrium est présent en une proportion de 2 à 4,5 % en poids.

3. Corps moulé fritté selon l'une des revendications 1 et 2, caractérisé en ce que les précipités tétragonaux présentent une grosseur de 20 à 150nm.

4. Corps moulé fritté selon l'une quelconque des revendications 1 à 3, caractérisé en ce que le corps moulé fritté contient en outre 0,05 à 1 % en poids d'oxyde de strontium.

5. Corps moulé fritté selon l'une quelconque des revendications 1 à 4, caractérisé en ce que le corps moulé fritté est constitué, outre l'oxyde de zirconium partiellement stabilisé, par encore 5 à 20 % en volume de spinelle ($MgAl_2O_4$), comme autre matériau céramique.

6. Corps moulé fritté selon l'une quelconque des revendications 1 à 5, caractérisé en ce qu'il présente une résistance à la rupture par flexion $\sigma_B$ qui, après une contrainte thermique de 1000h à 1000° C, est:

1. > 400 MPa, mesurée à la température ambiante,

2. > 200 MPa, mesurée à 1000° C.

7. Procédé pour la préparation du corps moulé fritté selon l'une quelconque des revendications 1 à 3 et 6, caractérisé en ce qu'un mélange d'oxyde de zirconium avec de l'oxyde de magnésium en une proportion de 0,5 à 3 % en poids et de l'oxyde d'yttrium en une proportion de 1,0 à 5 % en poids - calculées par rapport à la composition totale d'oxyde de zirconium partiellement stabilisé dans le corps moulé fritté - est soumis à un broyage humide, avec addition d'un agent dispersant, et après séchage par pulvérisation, un corps est produit par compression du mélange en poudre et ce corps est chauffé, à une température suffisante pour produire une phase cubique, d'au moins 1600° C, et avec un temps de maintien d'au moins 0,5h, et il est refroidi à la température ambiante avec une vitesse de refroidissement de 250° C/h à 400° C/h.

8. Procédé pour la préparation du corps moulé fritté selon l'une quelconque des revendications 1 à 3 et 5 à 7, caractérisé en ce que le mélange contient en outre du spinelle ($MgAl_2O_4$) en une proportion telle que le corps moulé fritté contienne 5 à 20 % en volume de spinelle ($MgAl_2O_4$).

9. Procédé pour la préparation du corps moulé fritté selon l'une quelconque des revendications 1 à 8, caractérisé en ce qu'au mélange, on ajoute encore 0,05 à 1 % en poids d'oxyde de strontium.

10. Utilisation du corps moulé fritté selon l'une quelconque des revendications 1 à 9, pour un composant sous contrainte durable à une température supérieure à 900° C, sous la forme de: filières, matrices isothermes pour le formage des métaux, têtes de piston, fonds de culasse de cylindre, guides de soupape, revêtements de cylindre, sondes de mesure d'oxygène (sondes lambda).